# EUROPÄISCHE PATENTSCHRIFT

(11) **EP 3 496 065 B1**
(45) Veröffentlichungstag und Bekanntmachung des Hinweises auf die Patenterteilung: **30.12.2020**
(21) Anmeldenummer: 18405020.1
(22) Anmeldetag: 23.10.2018
(51) Int. Cl.: G01C 21/00, G01C 21/34, G08G 1/08, G08G 1/01

(54) **SYSTEM UND VERFAHREN ZUM VERRINGERN VON WARTEZEITEN IM STRASSENVERKEHR**
SYSTEM AND METHOD FOR REDUCING OF WAITING TIMES IN ROAD TRAFFIC
SYSTÈME ET PROCÉDÉ DE RÉDUCTION DES TEMPS D'ATTENTE DANS LE TRAFIC ROUTIER

(30) Priorität: 11.12.2017 CH 15012017
(43) Veröffentlichungstag der Anmeldung: 12.06.2019
(73) Patentinhaber: Graphmasters SA, 3095 Spiegel b. Bern (CH)
(72) Erfinder: Heise, Sebastian, D-32369 Rahden (DE)

(56) Entgegenhaltungen:
- DE-A1-102011 107 881
- US-B2- 9 129 525

## Beschreibung

Die Erfindung betrifft ein System und ein Verfahren zum Verringern von Wartezeiten im Straßenverkehr nach den unabhängigen Ansprüchen.

Weiter erlaubt die Erfindung eine dynamische Routenführung eines Fahrzeuges, insbesondere unter Berücksichtigung und Beeinflussung von Ampelschaltungen von steuerbaren Ampeln.

Im Stand der Technik sind Verfahren bekannt zum Abfragen von Ampelschaltungen durch Navigationssysteme von Fahrzeugen. Hierbei erhält das Navigationssystem Daten bezüglich aktueller und zukünftiger Ampelsignale entlang einer geplanten Fahrtroute. Das Navigationssystem kann aus diesen Daten die voraussichtliche Ankunftszeit des Fahrzeugs unter Berücksichtigung von Wartezeiten an den Ampeln entlang der geplanten Fahrtroute berechnen.

Mit einem aus der DE 10 2011 107 881 A1 bekannten System zur Optimierung von Rettungswegen für Einsatzfahrzeuge soll eine Verkehrsflussleitung auf einem Rettungsweg eines Einsatzfahrzeugs basierend auf dessen Position und ggf. Route, die mit einem globalen Satellitennavigationssystem bestimmt werden können, optimiert werden. Das System enthält eine Empfangseinrichtung für den fortlaufenden Empfang von Positionsdaten eines Einsatzfahrzeugs, eine Ermittlungseinrichtung zum Ermitteln von Wegpunkten, die ausgehend von den letzten empfangenen Positionsdaten des Einsatzfahrzeugs in den nächsten Zeitpunkten vom Einsatzfahrzeug erreicht werden können, und eine Steuereinrichtung zum Einstellen von Signalanlagen an den ermittelten Wegpunkten zur Optimierung eines Rettungswegs des Einsatzfahrzeugs.

Die US 9,129,525 B2 offenbart ein System und Verfahren zur Ampelsteuerung unter Verwendung von Zielinformationen in Kalenderdaten eines Benutzergeräts mit einer Vielzahl von Benutzergeräten, die zum Speichern von Kalenderdaten einschließlich Zielinformationen betreibbar sind, einer Gemeindebehörde-Koordinatorinstanz, die mit den Benutzergeräten über ein Gemeinde-Netzwerk kommuniziert und die Kalenderdaten abrufen kann, und einer Verkehrsmanagementsteuerung, die mit der Koordinatorinstanz gekoppelt ist und so betreibbar ist, dass sie Anweisungen von dem Koordinator empfängt, um mindestens eine Ampel in einer Gemeinde in Reaktion auf die Zielinformationen zu steuern.

Neben berechneten Ankunftszeiten und Vorschlägen von Fahrtrouten sind jedoch im Stand der Technik keine Lösungen bekannt, welche Fahrtzeiten und Fahrtrouten aktiv beeinflussen.

Es ist daher eine Aufgabe der Erfindung, bekannte Systeme und Verfahren hinsichtlich von Fahrtzeiten von Fahrzeugen zu verbessern.

Zu diesem Zweck wird ein System nach Anspruch 1 und ein Verfahren nach Anspruch 3 bereitgestellt. Ausführungsformen der Erfindung sind in den abhängigen Ansprüchen beschrieben.

Die Erfindung wird nachfolgend anhand einer Figur an einem Beispiel beschrieben.

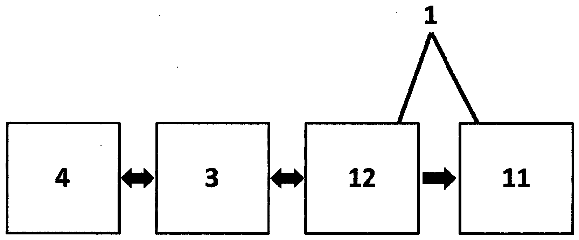

Die Figur zeigt eine schematische Blockdarstellung einer steuerbaren Ampel mit Ampel und Ampelsteuerung, welche mit einem Rechnersystem kommunikationstechnisch verbunden ist, und ein Navigationssystem, welches ebenfalls mit einem Rechnersystem kommunikationstechnisch verbunden ist.

Die Figur zeigt eine schematische Blockdarstellung einer steuerbaren Ampel (1), welche eine gewöhnliche Ampel (11) oder Verkehrsampel mit einer verbundenen Ampelsteuerung (12) umfasst. Die programmierte Ampelsteuerung (12) dient zur Steuerung der Signale, welche die Ampel (11) anzeigt, und umfasst gewöhnlich Prozessoren. Die steuerbare Ampel (1) ist mit wenigstens einem Rechnersystem (3) via kabelloser Datenkommunikation verbunden, was schematisch durch eine Linie dargestellt ist. Das Rechnersystem (3) umfasst wenigstens einen Router. Das Rechnersystem (3) wiederum ist via kabelloser Datenkommunikation mit einem oder einer Vielzahl von Navigationssystemen (4) verbunden. Das Navigationssystem (4) ist hierbei ein im Fahrzeug fest installiertes Navigationssystem (4), ein mobiles Navigationssystem (4) oder ein mobiles Endgerät, auf welchem eine Navigationssoftware installiert ist.

Während der Fahrt sendet das Navigationssystem (4) via Sendeeinrichtung und einem mobilen Funknetz Daten an das Rechnersystem (3) bezüglich der geplanten Fahrstrecke oder Fahrwegen des Fahrzeugs. Das Rechnersystem (3) vergleicht diese Wegdaten mit gespeicherten Daten von entlang der Fahrtstrecke befindlichen steuerbaren Ampeln (1). Das Rechnersystem (3) ist dazu ausgebildet, Ankunftszeiten des Fahrzeugs an den steuerbaren Ampeln (1) zu berechnen. Hierzu bedient sich das Rechnersystem (3) bei GPS Positionsdaten des Fahrzeugs und zudem daraus berechneter Geschwindigkeiten des Fahrzeugs. Weiter sendet das Rechnersystem (3) Anfragedaten an die steuerbaren Ampeln (1) zu dem Zweck, die Signale der Ampeln (11) zu beeinflussen. Ermittelt das Rechnersystem (3) z.B. eine Ankunftszeit des Fahrzeugs in 3 Minuten an einer bestimmten Ampel (11), sendet das Rechnersystem (3) eine Anfrage auf ein Grün-Signal an die steuerbare Ampel (1) nach Ablauf von 3 Minuten. Die Ampelsteuerung (12) der Ampel (11) bewertet die Anfrage des Rechnersystems (3) und entscheidet ob dann ein Grün-Signal an der Ampel (11) angezeigt wird.

Ein Kriterium für die Bewertung der Anfrage ist es, einen optimierten Durchsatz von Fahrzeugen entlang von Fahrtwegen zu erzeugen. Hierzu sendet eine Vielzahl von Navigationssystemen (4) Wegdaten an das Rechnersystem (3), welches in einem großflächigen Gebiet eine Vielzahl von Ampelsteuerungen (12) anfragt. Werden an einer Ampel (11) z. B. 10 Fahrzeuge in einem Zeitrahmen von 1 Minute in einer Richtung erwartet und in der gekreuzten Richtung nur 2 Fahrzeuge im selben Zeitraum, so wird die Anfrage der 10 Fahrzeuge bevorzugt und die Ampelsteuerung (12) gibt diesen ein grünes Signal. Mit diesen Maßnahmen wird der Verkehrsfluss erheblich erhöht, Rotphasen an Ampeln (11) gesamtheitlich betrachtet verringert und daher werden Wartezeiten von Fahrzeugen an steuerbaren Ampeln (1) verringert. So können etwa die Ampeln an einer Hauptstraße mit hohem Verkehrsaufkommen erst dann ein rotes Signal geben, wenn die auf der Grundlage von Anfragedaten zu erwartende Anzahl von Fahrzeugen der kreuzenden Nebenstraßen einen Referenzwert erreichen, so dass der Verkehrsfluss auf der Hauptstraße erhöht wird und wiederum die Gesamtwartezeit der Summe der Fahrzeuge verringert wird.

Ein weiteres Beispiel der Erfindung betrifft das Bestimmen von Ankunftszeiten von weiteren Fahrzeugen an den steuerbaren Ampeln (1) im wenigstens einen Rechnersystem (3) auf der Grundlage von Wahrscheinlichkeiten entsprechend der berechneten Vielzahl von Fahrzeugen. Dieses Beispiel betrifft den Fall, dass nicht alle Fahrzeuge bzw. deren Navigationssysteme (4) Wegdaten an das Rechnersystem (3) senden. Die steuerbaren Ampeln (1) im betrachteten System werden wie beschrieben vom Rechnersystem (3) angefragt. Zusätzlich errechnet das Rechnersystem (3) aus gespeicherten Daten Wahrscheinlichkeiten, mit welchen die weiteren Fahrzeuge, welche keine Wegdaten senden, an den steuerbaren Ampeln (1) eintreffen. Die weiteren Fahrzeuge werden somit ebenfalls für das Verringern von Wartezeiten berücksichtigt. Sind etwa 60% der Fahrzeuge mit Navigationssystemen (4) ausgestattet, welche wie beschrieben Wegdaten senden, und die weiteren Fahrzeuge nicht, so werden auch diese 40% Fahrzeuge bei dieser Art von dynamischer Routenführung berücksichtigt. So kann z. B. von den im Rechnersystem (3) bekannten, dahin übermittelten Fahrtstrecken Rückschluss auf Geschwindigkeit und Fahrtstrecke der weiteren Fahrzeuge gezogen werden, etwa aufgrund der Annahme, dass diese ähnlich oder gleich sind zu den Fahrtstrecken und Ankunftszeiten der Fahrzeuge, welche Wegdaten senden.

## Patentansprüche

1. System zum Verringern von Wartezeiten im Straßenverkehr umfassend eine Anzahl von steuerbaren Ampeln (1), wenigstens ein Rechnersystem (3) zum Ansteuern der Ampeln (1) und wenigstens ein mit dem wenigstens einen Rechnersystem (3) kommunikationstechnisch verbundenen Navigationssystem (4) in einem Fahrzeug,
wobei das wenigstens eine Navigationssystem (4) dazu ausgebildet ist, Wegdaten von Fahrtwegen an das wenigstens eine Rechnersystem (3) zu senden, welches dazu ausgebildet ist, Ankunftszeiten des Fahrzeugs an den steuerbaren Ampeln (1) zu berechnen,
wobei das wenigstens eine Rechnersystem (3) weiter dazu ausgebildet ist, auf der Grundlage der Ankunftszeiten Anfragedaten an die steuerbaren Ampeln (1) zu senden und die steuerbaren Ampeln (1) geschaltet werden unter Berücksichtigung der Anfragedaten,
**dadurch gekennzeichnet, dass** das Rechnersystem (3) dazu ausgebildet ist, Anfragedaten unter Berücksichtigung einer Vorrangigkeit einer Mehrzahl von Fahrzeugen zu berechnen und die steuerbaren Ampeln (1) dazu ausgebildet sind, unter Berücksichtigung der berechneten Anfragedaten zum Zwecke eines optimierten Durchsatzes von Fahrzeugen entlang von Fahrtwegen zu schalten und
neue Wegdaten der Fahrzeuge unter Berücksichtigung von Schaltsignalen der steuerbaren Ampeln (1) auf den den Wegdaten entsprechenden Fahrtwegen der der Vielzahl von Navigationssystemen (4) entsprechenden Fahrzeuge zu berechnen und an die Vielzahl von Navigationssystemen (4) als Vorschlag aktualisierter Fahrtwege zu senden.

2. System nach Anspruch 1, **dadurch gekennzeichnet,**
**dass** das Rechnersystem (3) ein zentrales Ampelschaltsystem ist.

3. Verfahren zum Verringern von Wartezeiten im Straßenverkehr mit den Verfahrensschritten:
Senden von Wegdaten von wenigstens einem Navigationssystem (4) in einem Fahrzeug an wenigstens ein Rechnersystem (3), Berechnen von Ankunftszeiten des Fahrzeugs an den steuerbaren Ampeln (1) im wenigstens einen Rechnersystem (3),
Senden von Anfragedaten von dem wenigstens einen Rechnersystem (3) an steuerbare Ampeln (1) auf der Grundlage der Ankunftszeiten, Schalten der steuerbaren Ampeln (1) unter Berücksichtigung der Anfragedaten,
Senden von Wegdaten von einer Vielzahl von Navigationssystemen (4) an das wenigstens eine Rechnersystem (3),
Berechnen der Ankunftszeiten einer Vielzahl von Fahrzeugen in dem wenigstens einen Rechnersystem (3), **gekennzeichnet durch**:
Berechnen der Anfragedaten unter Berücksichtigung einer Vorrangigkeit einer Mehrzahl von Fahrzeugen in dem wenigstens einen Rechnersystem (3)
Schalten der steuerbaren Ampeln (1) unter Berücksichtigung der berechneten Anfragedaten zum Zwecke eines optimierten Durchsatzes von Fahrzeugen entlang von Fahrtwegen,
Berechnen neuer Wegdaten der Fahrzeuge unter Berücksichtigung von Schaltsignalen der steuerbaren Ampeln (1) auf den den Wegdaten entsprechenden Fahrtwegen der der Vielzahl von Navigationssystemen (4) entsprechenden Fahrzeuge und
Senden der neuen Wegdaten als Vorschlag aktualisierter Fahrtwege an die Vielzahl von Navigationssystemen (4).

4. Verfahren nach Anspruch 3, **gekennzeichnet durch** Bestimmen von Ankunftszeiten von weiteren Fahrzeugen an den steuerbaren Ampeln (1) in dem wenigstens einen Rechnersystem (3) auf der Grundlage von Wahrscheinlichkeiten entsprechend der berechneten Vielzahl von Fahrzeugen.

## Claims

1. System for reducing delays in road traffic, comprising
a number of controllable traffic lights (1), at least one computer system (3) for controlling the traffic lights (1), and at least one navigation system (4) located in a vehicle and communicatively linked to the at least one computer system (3),
wherein the at least one navigation system (4) is designed to transmit route data of driving routes to the at least one computer system (3), which is designed to calculate arrival times of the vehicle at the controllable traffic lights (1),
wherein the at least one computer system (3) is additionally designed to transmit request data based on the arrival times to the controllable traffic lights (1) and
wherein the controllable traffic lights (1) are switched under consideration of the request data,
**characterized in that**
the computer system (3) is designed to calculate request data under consideration of a priority of a majority of vehicles, and that the controllable traffic lights (1) are designed to switch under consideration of the calculated request data for the purpose of an optimized throughput of vehicles along driving routes, and
to calculate new route data of the vehicles under consideration of the switching signals of the controllable traffic lights (1) along the driving routes of the vehicles corresponding to the route data, which vehicles correspond to the multiplicity of navigation systems (4), and to transmit the new route data of the vehicles to the multiplicity of navigation systems (4) as a proposal of updated driving routes.

2. System according to claim 1, **characterized in that** the computer system (3) is a central traffic-light switching system.

3. Method for reducing delays in road traffic, comprising the following steps:
transmitting route data of at least one navigation system (4) in a vehicle to at least one computer system (3),
calculating, in the at least one computer system (3), arrival times of the vehicle at the controllable traffic lights (1),
transmitting request data of the at least one computer system (3) to controllable traffic lights (1) on the basis of the arrival times,
switching the controllable traffic lights (1) under consideration of the request data, transmitting route data of a multiplicity of navigation systems (4) to the at least one computer system (3),
calculating, in the at least one computer system (3), the arrival times of a multiplicity of vehicles,
**characterized by**
calculating, in the at least one computer system (3), the request data under consideration of a priority of a majority of vehicles,
switching the controllable traffic lights (1) under consideration of the calculated request data for the purpose of an optimized throughput of vehicles along driving routes,
calculating new route data of the vehicles under consideration of switching signals of the controllable traffic lights (1) along the driving routes of the vehicles corresponding to the route data, which vehicles correspond to the multiplicity of navigation systems (4), and
transmitting the new route data to the multiplicity of navigation systems (4) as a proposal of updated driving routes.

4. Method according to claim 3, **characterized by** determining, in the at least one computer system (3), arrival times of further vehicles at the controllable traffic lights (1) on the basis of probabilities corresponding to the calculated multiplicity of vehicles.

## Revendications

1. Système de réduction des temps d'attente dans le trafic routier, comprenant un certain nombre de feux de circulation pouvant être commandés (1), au moins un système informatique (3) destiné à commander les feux de circulation (1) et au moins un système de navigation (4) présent dans un véhicule, qui est relié par une technologie de communication audit au moins un système informatique (3),
dans lequel ledit au moins un système de navigation (4) est conçu pour envoyer des données d'itinéraires audit au moins un système informatique (3), lequel est conçu pour calculer des temps d'arrivée du véhicule aux feux de circulation pouvant être commandés (1),
dans lequel ledit au moins un système informatique (3) est en outre conçu pour envoyer des données de demande aux feux de circulation pouvant être commandés (1) sur la base des temps d'arrivée et les feux de circulation pouvant être commandés (1) sont activés en tenant compte des données de demande,
**caractérisé en ce que**
le système informatique (3) est conçu pour calculer des données de demande en tenant compte d'une priorité d'une pluralité de véhicules et les feux de circulation pouvant être commandés (1) sont conçus pour activer des feux de circulation le long d'itinéraires en tenant compte des données de demande calculées à des fins d'optimisation du flux de trafic des véhicules et
pour calculer de nouvelles données d'itinéraires des véhicules en tenant compte de signaux d'activation des feux de circulation pouvant être commandés (1) sur les itinéraires de véhicules correspondant aux données d'itinéraire de la pluralité de systèmes de navigation (4)
et pour les envoyer à la pluralité de systèmes de navigation (4) en tant que proposition d'itinéraires actualisés.

2. Système selon la revendication 1, **caractérisé en ce que** le système informatique (3) est un système central d'activation des feux de circulation.

3. Procédé de réduction des temps d'attente dans le trafic routier, comprenant les étapes de procédé suivantes :
l'envoi de données d'itinéraires d'au moins un système de navigation (4) présent dans un véhicule à au moins un système informatique (3), le calcul de temps d'arrivée du véhicule aux feux de circulation pouvant être commandés (1) dans ledit au moins un système informatique (3),
l'envoi de données de demande dudit au moins un système informatique (3) à des feux de circulation pouvant être commandés (1) sur la base des temps d'arrivée,
l'activation des feux de circulation pouvant être commandés (1) en tenant compte des données de demande,
l'envoi de données d'itinéraires d'une pluralité de systèmes de navigation (4) audit au moins un système informatique (3),
le calcul des temps d'arrivée d'une pluralité de véhicules dans ledit au moins un système informatique (3), **caractérisé par** :
le calcul des données de demande en tenant compte d'une priorité d'une pluralité de véhicules dans ledit au moins un système informatique (3),
l'activation des feux de signalisation pouvant être commandés (1) en tenant compte des données de demande calculées à des fins d'optimisation du flux de trafic des véhicules le long d'itinéraires,
le calcul de nouvelles données d'itinéraires des véhicules en tenant compte de signaux d'activation des feux de circulation pouvant être commandés (1) sur les itinéraires de véhicules correspondant aux données d'itinéraires de la pluralité de systèmes de navigation (4), et
l'envoi des nouvelles données d'itinéraires à la pluralité de systèmes de navigation (4) en tant que proposition d'itinéraires actualisés.

4. Procédé selon la revendication 3, **caractérisé par** la détermination de temps d'arrivée d'autres véhicules aux feux de circulation pouvant être commandés (1) dans ledit au moins un système informatique (3) sur la base de probabilités correspondant à la pluralité calculée de véhicules.
